# EUROPÄISCHE PATENTANMELDUNG

(11) **EP 1 422 210 A1**
(43) Veröffentlichungstag der Anmeldung: **26.05.2004**
(21) Anmeldenummer: 02025674.9
(22) Anmeldetag: 20.11.2002
(51) Int. Cl.: C04B 35/64, B65D 81/34

(54) **Verdichtung keramischer Werkstoffe mit Hilfe von elektromagnetischen Zentimeterwellen sowie Gefäss zur Durchführung des Verfahrens**

(71) Anmelder: Vita Zahnfabrik H. Rauter GmbH & Co. KG, D-79704 Bad Säckingen (DE)
(72) Erfinder: Stephan, Marc Dr., 79539 Lörrach (DE); Vollmann, Markus Dr., 79713 Bad Säckingen (DE); Thiel, Norbert Dr., 79713 Bad Säckingen (DE)
(74) Vertreter: von Kirschbaum, Alexander, Dipl.-Ing.

(57) **Zusammenfassung**

Verfahren zur Herstellung keramischer Teile mit bestimmter Porosität durch Sinterung mittels Mikrowellen, wobei in einem Gefäß zu sinternde Werkstoffe angeordnet sind, dadurch gekennzeichnet dass
- die Mikrowellen Energie zur Sinterung über elektromagnetische Wellen im Bereich der Vakuumwellenlänge von 5 cm - 20 cm im Multimode mit einer elektromagnetischen Leistung bis zu einem Kilowatt in zu sinternde Werkstoffe einbringen und
- das Gefäß neben Primärmaterialien zum Aufbau des Gefäßes aus einem Sekundärmaterial aufgebaut ist, das aus einer Mischung von nichtmetallischen para-, ferromagnetischen-, antiferromagnetischen bzw. ferroelektrischen Materialien mit hochschmelzenden mikrowellentransparenten Materialien besteht.

## Beschreibung

Gegenstand der vorliegenden Erfindung ist die thermische Verdichtung poröser Keramikteile insbesondere mit kleinem Materialvolumen bis zu 10 cm³. Die thermische Verdichtung erfolgt durch elektromagnetische Strahlung im Wellenlängenbereich von 5 bis 20 cm über dissipative elektrische oder magnetische Polarisationseffekte des Materials. Ferner betrifft die Erfindung ein Gefäß bzw. eine Vorrichtung zur Durchführung des Verfahrens.

Derartige Verfahren werden bisher zur Trocknung, Entbinderung und Sinterung sehr großer keramischer Bauteile im industriellen Produktionsmaßstab angewendet. Die Vorteile dieses Verfahrens liegen im deutlich geringeren Energieverbrauch, der homogeneren Aufheizung (geringer Temperaturgradient) und verringerter Verdichtungszeiten. Dies resultiert in einem wirtschaftlicheren Herstellungsprozess.

Diese Verfahren sind immer noch für Oxidkeramiken wie Al₂O₃ und ZrO₂ problematisch dahingehend, dass bei Raumtemperatur keine wirksame elektromagnetische Dissipation stattfindet. Dieses Hindernis wurde bisher unter Zuhilfenahme einer konventionellen Heizung überbrückt, da die Effektivität der dissipativen Ankopplung der Zentimeterwellen ab einer bestimmten Temperatur drastisch ansteigt. Dies erhöht jedoch wiederum den Zeit- und Energieaufwand, so dass 'die oben aufgeführten Vorteile dieser Technik stark relativiert werden. Eine Umgehung der konventionellen Heizung kann durch Zumischung geeigneter Materialien, die schon bei Raumtemperatur signifikante Polarisationsverluste aufweisen, erreicht werden, oder geeigneter Sinterhilfsmittel. Nachteile dieser Methode liegen in den reduzierten mechanischen Eigenschaften der erkaltenden Keramik im Vergleich zum reinen Material. Insbesondere für den Einsatz in prothetischen Medizinprodukten sind diese aus ästhetischen und Biokompatibilitätsgründen nicht geeignet.

Des Weiteren ist die Wahl des Dämmmaterials zur thermischen Isolierung des Brennraums gegenüber der Umgebung für die großindustrielle Nutzung noch nicht geklärt. Die Schwierigkeit besteht in der geringen thermischen Leitfähigkeit bei gleichzeitig hoher Transparenz für die Zentimeterwellen.

Das der Erfindung zu Grunde liegende technische Problem bestand in der Schaffung eines Verfahrens sowie eines Gefäßes zur Durchführung des Verfahrens durch das die Mikrowellenbehandlung auch im nicht großtechnischen Bereich, insbesondere im Bereich der Dentalkeramik, möglich wird.

Das technische Problem wird gelöst durch ein Verfahren zur Herstellung keramischer Teile mit bestimmter Porosität durch Sinterung mittels Mikrowellen, wobei in einem Gefäß zu sinternde Werkstoffe angeordnet sind, dadurch gekennzeichnet dass
- die Mikrowellen Energie zur Sinterung über elektromagnetische Wellen im Bereich der Vakuumwellenlänge von 5 cm - 20 cm im Multimode mit einer elektromagnetischen Leistung bis zu einem Kilowatt in zu sinternde Werkstoffe einbringen, und
- das Gefäß, neben Primärmaterialien zum Aufbau des Gefäßes, aus einem Sekundärmaterial aufgebaut ist, das aus nichtmetallischen para-, ferro- oder antiferromagnetischen Materialien besteht.

Die vorliegende Erfindung löst die obengenannten Probleme durch Nutzung von nichtmetallischen para-, ferro oder antiferromagnetischen Materialien, die als Tiegelmaterial geeignet sind, welches sich durch dissipative Teilabsorption der elektromagnetischen Zentimeterwellen bei Raumtemperatur, hohen Schmelzpunkt und partieller Zentimeterwellentransparenz auch bei hohen Temperaturen (bis 1800 °C, insbesondere bis ca. 2000 °C) auszeichnet.

Die Benutzung dieses sogenannten Sekundärmaterials in einem Gefäß hat den Vorteil einer kontaminationsfreien Verdichtung des Primärmaterials aus dem das Gefäß ansonsten besteht. Die Auflage des Primärmaterials innerhalb des Gefäßes, wie einen Tiegel, erfolgt z.B. durch hochtemperaturfeste anorganische Fasermaterialien mit geringer Zentimeterwellenabsorption und geringer Wärmeleitfähigkeit. Diese sind im Hochtemperaturofenbau an sich bekannt. Dadurch das dieses Fasermaterial nur als Auflage dient, entfallen die obengenannten Nachteile. Bevorzugte Behältermaterialien sind vor allem nichtmetallische para-, ferromagnetische oder antiferromagnetsiche Materialien wie Chrom-, Eisen-, Nickel- und Manganoxide und daraus abzuleitende Spinell- bzw. Perowskitstrukturen (gebildet mit Metalloxiden ohne signifikante Absorbtion der Zentimeterwellen, z.B. ZnO) oder ferro- oder antiferromagnetische Spinell- wie z.B. Zinkochromit oder ferroelektrische Perowskitmaterialien wie z.B. Bariumstrontirumtitanate. Es ist vorteilhaft, _dass die Schmelztemperatur dieser Materialien so hoch wie möglich ist. Falls dies nicht der Fall ist, sollte einen hochschmelzendes, nichtmetallisches Material mit hoher Zentimeterwellentransparenz, wie z.B. Zinkoxid, zugemischt werden. Der Vorteil bei dieser Konstruktion des Zentimeterwellenofens ist, dass schon bei Leistungen von 1 Kilowatt bei 2,45 GHz im Multimode die hohe Temperatur von 1800°C erreicht wird. Somit wird dieser Ofen sehr preisgünstig und kleiner als herkömmliche Ofen für diesen Temperaturbereich.

Im erfindungsgemäßen Verfahren werden vorteilhafterweise als Material para-, ferro- bzw. antiferromagnetische Materialien wie Zinkochromit oder ferroelektrische Materialien wie Bariumstrontiumtitanat eingesetzt.

Die Vorteile bei bestimmten antiferromagnetischen Spinellstrukturen liegen in der hohen Schmelztemperatur und der schon bei Raumtemperatur hohen Verlustleistung von Mikrowellenstrahlung mit der herkömmlichen Frequenz im Bereich von 2 - 3 GHz, insbesondere 2, 3 - 2, 6 GHz und besonders bevorzugt von 2,45 GHz.

In einer Ausführungsform des erfindungsgemäßen Verfahrens liegt der . Wellenlängenbereich der elektromagnetischen Wellen zwischen 11 - 13 cm.

Dies ist der in der Konsumelektronik gebräuchlichste Frequenzbereich, so dass hier deutliche Kostenersparnisse vorliegen.

Die keramischen Teile, die erfindungsgemäß erhalten werden, weisen insbesondere eine Porosität von 0-50 Vol.-%, vorzugsweise 10 - 30 Vol.-% auf. Die Porosität ist über die Sintertemperatur steuerbar. Dichtgesinterte keramische Materialien (Porosität nahezu 0 %) haben den Vorteil der hohen Festigkeit gepaart mit hoher Transluzenz.

Erfindungsgemäß können zur Erzeugung der Endfestigkeit der hergestellten Produkte die keramischen Teile mit einem Glas infiltriert werden.

Die porösen Teile können später leicht nachbearbeitet werden und durch geeignete Infiltrationsverfahren auf Basis von anorgansichen Gläsern (z.B. Lanthansilikatgläser) oder organischen Materialien (z.B. UDMA, bis-GMA) verfestigt werden.

Das erfindungsgemäße Verfahren ermöglicht es, dass die keramischen Teile auf eine definierten Enddichte gesintert werden. Das Erreichen hoher Enddichten bei keramischen Materialien wie z.B. Aluminiumoxiden oder Zirkoniumoxiden ist bisher nur mit sehr hohem zeitlichen und teuren konventionellen Erhitzungsverfahren erreichbar.

Insbesondere ist das erfindungsgemäße Verfahren anwendbar zur Herstellung von dentalen Restaurationen.

Zur Einstellung ästhetischer Erfordernisse können dentalkeramische Gerüstteile mit dafür geeigneten Gläsern, wie z.B. Feldspatgläsern, Lithiumdisilikatgläsern oder Fluorapatitgläsern, verblendet werden.

In einer Ausführungsform des erfindungsgemäßen Verfahrens bestehen die zur Herstellung dentalkeramischer Restaurationen verwendeten Materialien aus Al₂O₃, Spinell, Ce- bzw. Y-stabilisiertem ZrO₂ (z.B. TZP, PSZ,) oder aus Mischungen dieser Materialien.

Diese Keramiken zeigen die höchsten Festigkeitswerte und Risszähigkeiten bei keramischen Materialien.

Erfindungsgemäß können vollkeramische, dentale Restaurationen aus dentalen keramischen Massen, wie Feldspatgläsern, Lithiumdisilikatgläsern oder Fluorapatitgläsern hergestellt werden, wobei das erfindungsgemäße Verfahren zur Glasierung von vollkeramischen dentalen Teilen oder z.B. für dentalkeramischen Presskeramiken als Pressofen und Vorwärmofen verwendbar ist.

Die Vorteile liegen hier in der deutlich verkürzten Prozesszeit bei gleichzeitig geringerem Energie- und somit Kostenaufwand.

Zur Erhöhung der Dichtsintertemperatur kann das Material des Gefäßes erfindungsgemäß aus einer Mischung des Materials mit einem hochschmelzenden, nichtmetallischen Material mit hoher Zentimeterwellentransparenz in einem weiten Temperaturbereich bestehen.

Besteht das Sekundärmaterial nur aus einem Stoff, der eine hohe Mikrowellenabsorption bei Raumtemperatur aufweist, so kann die Mikrowellenamplitude so stark abgeschwächt werden, dass das zu sinternde Material nicht mehr genügend aufgeheizt wird.

Insbesondere ist das hochschmelzende, nichtmetallische Material mit hoher Zentimeterwellentransparenz Zinkoxid.

Zinkoxid hat eine hohe Schmelztemperatur von ca. 2000 °C.

Ferner betrifft die Erfindung ein Gefäß, das insbesondere zur Durchführung des vorstehenden Verfahrens geeignet ist. Erfindungsgemäß weist das Gefäß ein Primär- und ein Sekundärmaterial auf, wobei das Sekundärmaterial ein nichtmetallisches para-, ferromagnetisches bzw. antiferromagnetisches Material aufweist. Auf Grund des Vorsehens eines derartigen Sekundärmaterials in dem Gefäß ist es möglich, bei Raumtemperatur innerhalb kurzer Zeit, insbesondere innerhalb weniger Sekunden, innerhalb des Gefäßes hohe Temperaturen zu erzielen. Hierbei können Temperaturen von ca. 2000°C erzielt werden. Es ist somit möglich, ohne das Vorsehen einer konventionellen Zusatzheizung auch Oxidkeramiken zu sintern. Dies ist mit herkömmlichen Mikrowelleneinrichtungen möglich, die im Bereich von ca. 700 Watt arbeiten und im Multimode-Verfahren betrieben werden.

Besonders bevorzugt ist es, das Gefäß insbesondere aus Materialien, die vorstehend anhand des Verfahrens beschrieben sind, auszugestalten. Vorzugsweise besteht das Sekundärmaterial aus einer Mischung von para-, ferro- bzw, antiferromagnetischem Material, wie z.B. Zinkchromit (ZnCr₂O₄) mit 0 - 99 Gew.-% Zinkit (ZnO).

Vorzugsweise weist das erfindungsgemäße Gefäß einen Aufnahmebereich auf, in den das zu sinternde Material angeordnet wird. Bei dieser besonders bevorzugten Ausführungsform ist der Aufnahmebereich zumindest partiell mit Sekundärmaterial umgeben. Beispielsweise ist der Aufnahmebereich zylindrisch und von einem Kreisring aus Sekundärmaterial umgeben. Vorzugsweise sind mehrere Sekundärmaterialelemente vorgesehen, die den Aufnahmebereich umgeben. Es handelt sich somit um mehrere Elemente, die keinen geschlossenen Ring oder dgl. bilden. Beispielsweise handelt es sich bei den Sekundärmaterialelementen um mehrere Kreisringsegmente. Die Sekundärmaterialelemente können jedoch auch andere Formen aufweisen, z.B. stabförmig ausgebildet sein oder einen mehreckigen, insbesondere rechteckigen Querschnitt haben.

Besonders bevorzugt ist es, wenn das Sekundärmaterial vom Primärmaterial umgeben ist. Hierdurch ist das zur Temperaturerzeugung dienende Sekundärmaterial nahe des Aufnahmebereichs angeordnet, eine direkte Berührung des Sekundärmaterials mit dem zu sinternden Material jedoch vermieden.

Nachfolgend wird die Erfindung anhand bevorzugter Ausführungsformen unter Bezugnahme auf die anliegenden Zeichnungen näher erläutert. Es zeigen:
- Fig. 1: eine schematische Schnitt-Explosionszeichnung einer ersten bevorzugten Ausführungsform des erfindungsgemäßen Gefäßes,
- Fig. 2: eine schematische Schnittansicht der ersten bevorzugten Ausführungsform des Gefäßes,
- Fig. 3: eine schematische Schnittansicht entlang der Linie III-III in Fig. 2,
- Fig. 4: eine schematische Schnitt-Explosionsansicht einer zweiten bevorzugten Ausführungsform des erfindungsgemäßen Gefäßes,
- Fig. 5: eine schematische Schnittansicht der zweiten Ausführungsform des erfindungsgemäßen Gefäßes und
- Fig. 6: eine schematische Schnittansicht entlang der Linie VI-VI in Fig. 5.

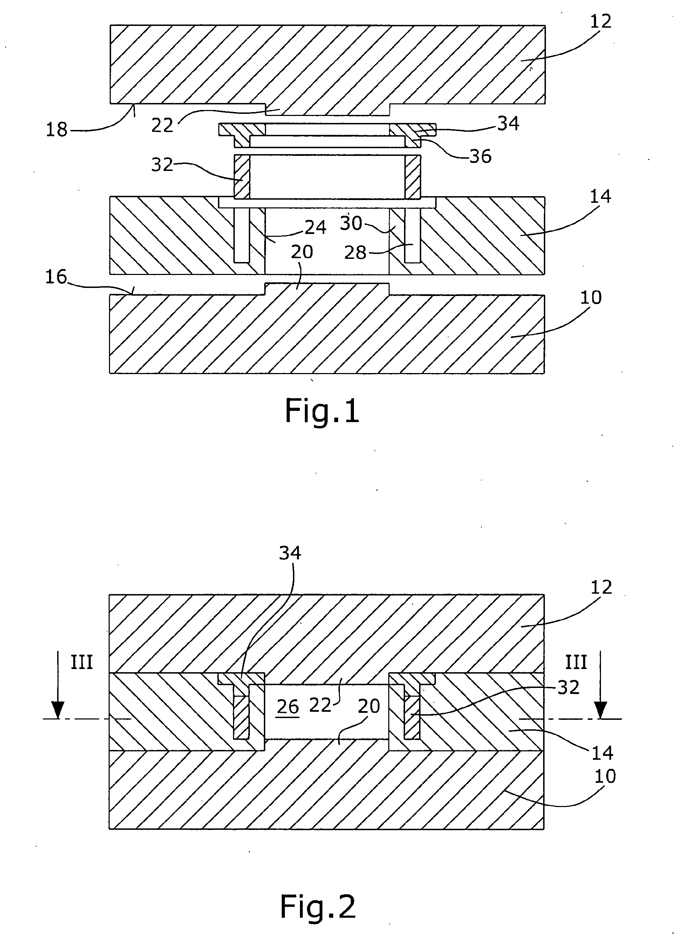

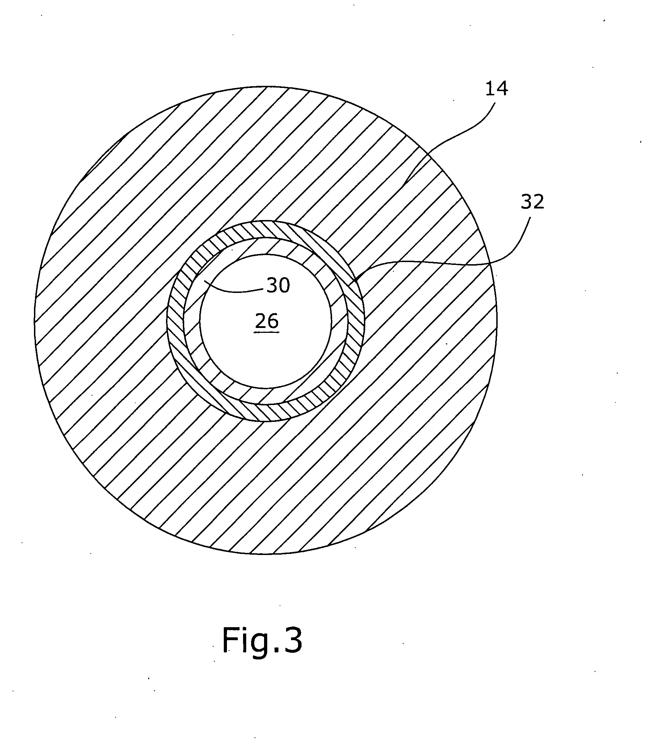

Die erste Ausführungsform (Fign. 1 - 3) des erfindungsgemäßen Gefäßes zur Durchführung des erfindungsgemäßen Verfahrens zur Herstellung keramischer Teile weist ein Bodenelement 10, ein Deckelelement 12 und ein Mittelelement 14 auf. Die Elemente 10, 12, 14 sind vorzugsweise aus Primärmaterial hergestellt. Das Bodenelement 10 und das Deckelelement 12 sind zylindrisch ausgebildet und weisen jeweils einen an der Innenseite 16 bzw. 18 angeordneten zylindrischen Ansatz 20 bzw. 22 auf. Das Mittelteil ist kreisringförmig und weist eine zylindrische Öffnung 24 auf, die in zusammengebautem Zustand (Fig. 2) den Aufnahmebereich 26 ausbildet. Der Durchmesser der zylindrischen Öffnung 24 entspricht den Durchmessern der zylindrischen Ansätze 20 und 22. Hierdurch ist in zusammengebautem Zustand ein zylindrischer, in sich geschlossener Aufnahmebereich 26 ausgebildet.

Zur Aufnahme von Sekundärmaterial ist in dem Mittelteil 14 eine ringförmige Ausnehmung 28 vorgesehen. Die Ausnehmung 28 umgibt den Aufnahmebereich 26, wobei es sich nicht zwangsläufig um eine kreisringförmige Ausnehmung handeln muss. In der bevorzugten, in den Fign. 1 - 3 dargestellten Ausführungsform ist die Ausnehmung 28 kreisringförmig und umgibt den Aufnahmebereich 26 vollständig. Zwischen dem Aufnahmebereich 26 und der kreisringförmigen Ausnehmung 28 ist eine Wand 30 ausgebildet, die wie das gesamte Mittelteil 14 aus Primärmaterial besteht. Das Sekundärmaterial ist somit von Primärmaterial umgeben. In die kreisringförmige Ausnehmung 28 wird entweder ein Sekundärmaterialelement 32 aus Sekundärmaterial eingesetzt oder das Sekundärmaterial 32 in den Kreisring eingefüllt. Die Ausnehmung 28 wird sodann mit einem Verschlusselement 34, das vorzugsweise ebenfalls aus Primärmaterial hergestellt ist, Verschlossen. Bei dem Verschlusselement 34 handelt es sich ebenfalls um ein kreisringförmiges Element mit einem kreisringförmigen Ansatz 36, der in die Ausnehmung 28 ragt (Fig. 2).

Das Sekundärmaterialelement 32 und somit das Sekundärmaterial erstreckt sich vorzugsweise über einen Großteil, insbesondere mehr als zwei Drittel der Höhe des Aufnahmebereichs 26. Besonders bevorzugt ist es, wenn sich das Sekundärmaterial über die gesamte Höhe des Aufnahmebereichs erstreckt.

Ferner ist es möglich, in Fig. 2 unter und/ oder oberhalb des Aufnahmebereichs 26 Elemente aus Sekundärmaterial vorzusehen.

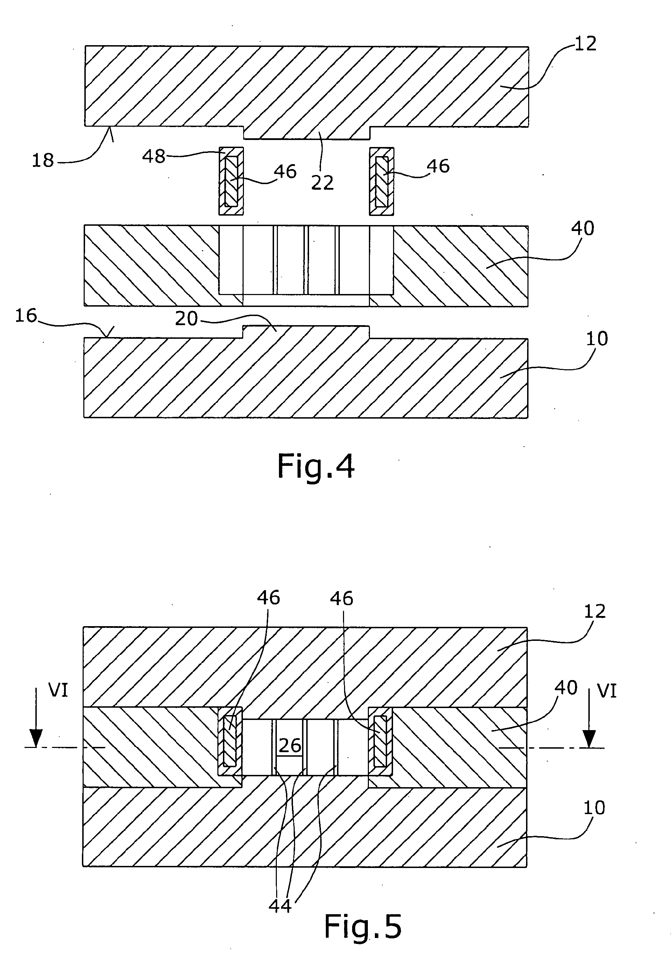

Bei der zweiten bevorzugten Ausführungsform (Fign. 4 - 6) sind mit der ersten Ausführungsform (Fign. 1 - 3) ähnlich oder identische Bestandteile mit denselben Bezugszeichen gekennzeichnet.

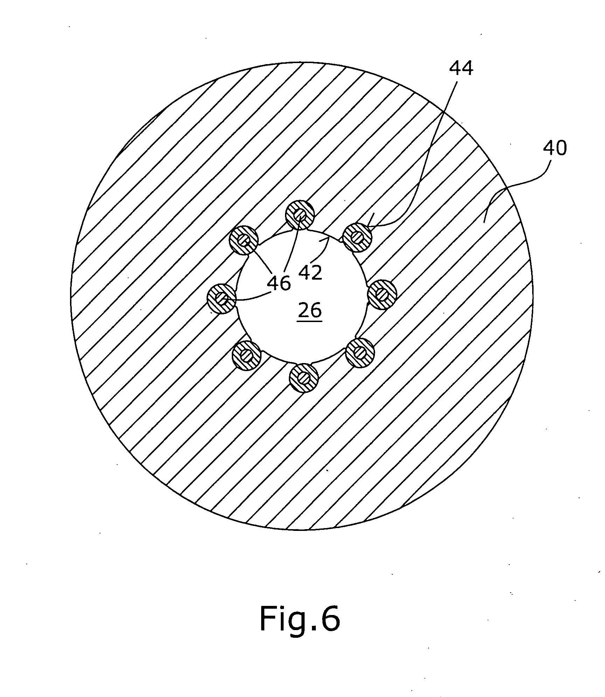

Das Bodenelement 10 sowie das Deckelelement 12 sind im Wesentlichen identisch ausgebildet. Ein Mittelteil 40 weist ebenfalls einen kreisförmigen Querschnitt auf. Durch das Mittelteil 40 ist ein im Wesentlichen zylindrischer Aufnahmebereich 26 ausgebildet. Eine Innenwand 42 (Fig. 6) des Aufnahmebereichs 26 ist jedoch nicht glatt ausgebildet. Vielmehr sind ausgehend von der Innenwand 42 zylindrische Kammern 44 vorgesehen. In die zylindrischen Kammern 44 werden einzelne stabförmige Sekundärmaterialelemente 46 eingeführt. Die Sekundärmaterialelemente 46 sind im dargestellten Ausführungsbeispiel gekapselt ausgebildet. Die Sekundärmaterialelemente 46 sind somit von einer Mantelschicht 48 vollständig umgeben. Die Mantelschicht 48 ist vorzugsweise aus Primärmaterial.

### Die Erfindung wird im Folgenden anhand von zwei Beispielen näher erläutert:

Es wurde ein Gefäß aus hochtemperaturfesten Aluminumoxidmaterial (haltbar bis 1800 °C) in der in den Fign. 1 - 3 gezeigten Gefäßform hergestellt. Dieses wurde mit einem Sekundärmaterial 32 in die ringförmige Vertiefung oder Ausnehmung 28 gefüllt. Das Sekundärmaterial besteht aus einer Mischung bzw. Mischkristallen von 50 Gew.-% Zinkochromit (ZnCr₂O₄) und 50 Gew.-% Zinkit (ZnO).

### Beispiel 1:

Das zu sinternde Material besteht aus einem dentalen Kronenmaterial aus yttriumstabilisierten Zirkoniumoxid. Diese Kronenkappe wird in das Gefäß in den Aufnahmebereich 26 auf eine Aluminiumoxidbrennwatte gelegt und zusammen mit dem Gefäß in eine konventionelle Mikrowelle (900 W, Multimode, 2,45 GHz) gestellt. Diese wird 15 Minuten bei einer Leistung von 700 W gefahren. Die Enddichte des so gesinterten Zirkoniumoxidmaterials liegt bei 6,06 g/cm³ und somit bei der theoretischen Dichte dieses Materials.

### Beispiel 2:

Das zu sinternde Material besteht aus einer dentalen dreigliedrigen Brücke mit einer Gesamtlänge von 35mm vor dem Dichtsintern. Diese dreigliedrige Brücke wird in das Gefäß auf eine Aluminiumoxidbrennunterlage gelegt und zusammen mit dem Gefäß in ein konventionelles Mikrowellengerät (s.o.) gestellt. Diese wird für eine halbe Stunde bei 700 W gefahren. Die Enddichte der so gesinterten dreigliedrigen Brücke liegt bei 6,0 g/cm³ und somit bei der theoretischen Dichte dieses Materials.

## Patentansprüche

1. Verfahren zur Herstellung keramischer Teile mit bestimmter Porosität durch Sinterung mittels Mikrowellen, wobei in einem Gefäß zu sinternde Werkstoffe angeordnet sind,
**dadurch gekennzeichnet, dass**
- die Mikrowellen Energie zur Sinterung über elektromagnetische Wellen im Bereich der Vakuumwellenlänge von 5 cm - 20 cm im Multimode mit einer elektromagnetischen Leistung bis zu einem Kilowatt in zu sinternde Werkstoffe einbringen, und
- das Gefäß neben Primärmaterialien zum Aufbau des Gefäßes aus einem Sekundärmaterial aufgebaut ist, das insbesondere eine Mischung oder Mischkristallen von nichtmetallischen para-, ferromagnetischen, antiferromagnetischen bzw. ferroelektrischen Materialien mit hochschmelzenden mikrowellentransparenten Materialien aufweist.

2. Verfahren nach Anspruch 1, **dadurch gekennzeichnet, dass** der Wellenlängenbereich der elektromagnetischen Wellen zwischen 11 - 13 cm liegt.

3. Verfahren nach Anspruch 1 oder 2, **dadurch gekennzeichnet, dass** die keramischen Teile eine Porosität von 0 - 50 Vol.-% aufweisen.

4. Verfahren nach Anspruch 3, **dadurch gekennzeichnet, dass** die Porosität zwischen 10 - 30 Vol.-% liegt, wobei die Porosität über den Temperaturverlauf einstellbar ist.

5. Verfahren nach mindestens einem der Ansprüche 1 bis 4, **dadurch gekennzeichnet, dass** zur Erzeugung der Endfestigkeit die keramischen Teile mit einem Glas infiltriert werden.

6. Verfahren nach mindestens einem der Ansprüche 1 bis 5, **dadurch gekennzeichnet, dass** die keramischen Teile auf eine definierten Enddichte von mindestens 80 %, vorzugsweise mindestens 90 % und besonders bevorzugt mindestens 98 % der theoretischen Dichte des jeweiligen Materials gesintert werden.

7. Verfahren nach mindestens einem der Ansprüche 1 bis 6, **dadurch gekennzeichnet, dass** es sich bei den keramischen Teilen um dentale Restaurationen handelt.

8. Verfahren nach mindestens einem der Ansprüche 1 bis 7, **dadurch gekennzeichnet, dass** dentalkeramische Gerüstteile mit dafür geeigneten Gläsern, wie z.B. aus Feldspatgläser, Lithiumdisilikatgläser oder Fluorapatitgläser, verblendet werden.

9. Verfahren nach mindestens einem der Ansprüche 1 bis 8, **dadurch gekennzeichnet, dass** die verwendeten Materialien zur Herstellung dentalkeramischer Restaurationen bevorzugt aus Al₂O₃, Spinell, Ce- bzw. Y-stabilisiertem ZrO₂, (z.B. TZP TetragonalZirconiaPolycrystal, PSZ PartiaIStabilizedZirconia) oder aus Mischungen dieser Materialien bestehen.

10. Verfahren nach mindestens einem der Ansprüche 1 bis 9 zur Herstellung vollkeramischer, dentaler Restaurationen aus dentalen keramischen Massen, wie Feldspatgläser, Lithiumdisilikatgläser oder Fluorapatitgläser, wobei das Verfahren nach mindestens einem der Ansprüche 1 bis 10 zur Glasierung von vollkeramischen dentalen Teilen oder z.B. für dentalkeramischer Presskeramiken als Pressofen und Vorwärmofen verwendet wird.

11. Gefäß zur Durchführung des Verfahrens nach einem der Ansprüche 1 bis 10 umfassend ein Primär- und Sekundärmaterial, **dadurch gekennzeichnet, dass** das Sekundärmaterial ein nichtmetallisches para-, ferromagnetisches- bzw. antiferromagnetisches Material aufweist.

12. Gefäß nach Anspruch 10, **dadurch gekennzeichnet, dass** das Sekundärmaterial aus einer Mischung von para-, ferro- bzw. antiferromagnetischen Material wie z.B. Zinkochromit (ZnCr₂O₄) mit 0- 99 Gew.-% Zinkit (Zinkoxid ZnO) besteht.

13. Gefäß nach Anspruch 11 oder 12, **dadurch gekennzeichnet, dass** zur Erhöhung der Dichtsintertemperatur das Sekundärmaterial des Gefäßes eine Mischung des Materials mit einem hochschmelzenden, nichtmetallischen Material mit hoher Zentimeterwellentransparenz in einem weiten Temperaturbereich aufweist.

14. Gefäß nach Anspruch 13, **dadurch gekennzeichnet, dass** das hochschmelzende, nichtmetallische Sekundärmaterial mit hoher Zentimeterwellentransparenz Zinkoxid (ZnO) ist.

15. Gefäß nach mindestens einem der Ansprüche 11 bis 14, **gekennzeichnet durch** einen Aufnahmebereich (26) zur Aufnahme des zu sinternden Materials, wobei um den Aufnahmebereich (26) zumindest partiell Sekundärmaterial vorgesehen ist.

16. Gefäß nach Anspruch 15, **dadurch gekennzeichnet, dass** der Aufnahmebereich (26) von mindestens einem, vorzugsweise mehreren Sekundärmaterialelementen (32, 46) umgeben ist.

17. Gefäß nach einem der Ansprüche 11 bis 16, **dadurch gekennzeichnet, dass** das Sekundärmaterial von Primärmaterial umgeben ist.

18. Gefäß nach einem der Ansprüche 11 bis 17, **dadurch gekennzeichnet, dass** sich das Sekundärmaterial über die gesamte Höhe des Aufnahmebereichs (26) erstreckt.

19. Gefäß nach einem der Ansprüche 15 bis 18, **dadurch gekennzeichnet, dass** die Sekundärmaterialelemente (46) stabförmig sind.

20. Gefäß nach einem der Ansprüche 15 bis 19, **dadurch gekennzeichnet, dass** die Sekundärmaterialelemente (46) regelmäßig um den Aufnahmebereich (26) verteilt angeordnet sind.

21. Gefäß nach einem der Ansprüche 15 bis 20, **dadurch gekennzeichnet, dass** die Sekundärmaterialelemente (46) insbesondere mit Primärmaterial gekapselt sind.
